# EUROPEAN PATENT APPLICATION

(11) **EP 4 600 161 A1**
(43) Date of publication of application: **13.08.2025**
(21) Application number: 24275010.7
(22) Date of filing: 08.02.2024
(51) Int. Cl.: B64U 70/95, B64U 70/99

(54) **MAGNETIC LANDING PAD SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A magnetic landing pad system, the system comprising: an aircraft landing pad comprising a magnetic element arranged to generate a magnetic field around the landing pad; and an aircraft comprising a magnetometer and a control unit coupled to the magnetometer; wherein the control unit is configured, based on a signal output from the magnetometer, to determine a location of the landing pad relative to the aircraft.

## Description

### FIELD

The present disclosure relates to a magnetic landing pad system comprising a magnetic landing pad arranged to generate a magnetic field and an aircraft configured to locate using the magnetic field; and to an aircraft landing pad.

### BACKGROUND

Many aircraft, such as vertical takeoff and landing (VTOL) aircraft and unmanned aerial vehicles (UAVs), use landing pads for safe and stable landing and takeoff. For example, where such an aircraft is controlled or launched from a vehicle, such as a land-based vehicle, amphibious vehicle, or an aquatic vehicle, it may take off from a landing pad mounted on the vehicle, and land on the landing pad mounted on the vehicle.

Such aircraft may visually locate the landing pad when landing. In the case of a piloted vehicle, the pilot may visually locate the landing pad when guiding the aircraft for landing. In the case of a UAV, a camera mounted on the UAV may locate the landing pad, and the UAV may autonomously locate the landing pad using the camera for landing. The landing pad may include a visual marker to assist in landing.

A problem exists that in poor light conditions, for example at night or in inclement weather conditions, the aircraft may be unable to visually locate the landing pad.

### SUMMARY

The present disclosure has been developed to address the above problem.

According to a first aspect, there is provided a magnetic landing pad system, the system comprising: an aircraft landing pad comprising a magnetic element arranged to generate a magnetic field around the landing pad (e.g. above the landing pad); and an aircraft comprising a magnetometer and a control unit coupled to the magnetometer; wherein the control unit is configured, based on a signal output from the magnetometer, to determine a location of the landing pad relative to the aircraft.

According to a second aspect, there is provided a magnetic landing pad system, the system comprising: a landing pad comprising a magnetometer and a first control unit coupled to the magnetometer; and an aircraft comprising a magnetic element arranged to generate a magnetic field around the aircraft (e.g. above the aircraft), and a second control unit configured to wirelessly communicate with the first control unit; wherein the first control unit is configured, based on a signal output from the magnetometer, to determine a location of the aircraft relative to the landing pad; and wherein the first control unit is configured to wirelessly communicate the location of the landing pad relative to the second control unit.

By using a magnetic field associated with one of the aircraft and the landing pad, and a magnetometer associated with the other of the aircraft and the landing pad, the aircraft can locate the landing pad regardless of ambient visibility.

The aircraft may be a VTOL aircraft. The aircraft may be a UAV.

The magnetometer may be a high-sensitivity magnetometer, for example a magnetometer having a resolution better than 100 picotesla in a 1 second sample time. For example, the magnetometer may be an optically pumped magnetometer (OPM), or a fluxgate magnetometer.

By using a high-sensitivity magnetometer, the strength of the magnetic field need not be unduly high. Where the magnetic element is a magnetic beacon, the power demand on the magnetic beacon therefore need not be unduly high. Similarly, where the magnetic element is a permanent magnet or permanent magnet array, the size and weight of the magnetic element need not be unduly large.

The control unit (e.g. first control unit) may be configured to determine a separation distance between the landing pad and the aircraft based on the signal output from the magnetometer. Accordingly, the signal output from the magnetometer may be a signal indicative of magnetic field strength

The magnetic element may comprise a permanent magnet or an array of permanent magnets. Alternatively, or additionally, the magnetic element may comprise a magnetic beacon, for example an electromagnet configured to generate a magnetic field when driven with a direct or alternating current.

The magnetometer may be configured to output a signal indicative of magnetic field strength (and not indicative of orientation of the directed magnetic field). The output signal may therefore be referred to herein as a scalar signal. In this case, the control unit (e.g. first control unit) may be configured to determine a separation distance between the landing pad and the aircraft based on the signal output from the magnetometer.

The magnetic landing pad system may further comprise a vehicle (for example a land-based vehicle, a hybrid vehicle, or an aquatic vehicle), and the aircraft landing pad may be mounted on the vehicle.

In a third aspect there is provided an aircraft landing pad, the aircraft landing pad comprising a magnetic element arranged to generate a magnetic field around the landing pad (e.g. above the landing pad).

The magnetic element may comprise a permanent magnet or an array of permanent magnet. Alternatively, or additionally, the magnetic element may comprise a magnetic beacon, for example an electromagnet configured to generate a magnetic field when driven with a direct or alternating current.

In a fourth aspect there is provided aircraft landing pad comprising a magnetometer arranged to detect magnetic flux originating from a region above the landing pad, and a control unit coupled to the magnetometer, the control unit configured, based on a signal output from the magnetometer, to determine a location from which the magnetic flux originates. The control unit may be configured, based on a signal output from the magnetometer, to determine a distance to the location from which the magnetic flux originates. The magnetometer may be an OPM, and may be configured to output a signal indicative of magnetic field strength.

In a fifth aspect, there may be provided a vehicle, the vehicle having a landing pad according to the third aspect or the fourth aspect mounted thereon.

### BRIEF DESCRIPTION OF THE DRAWINGS

Embodiments of the present disclosure will now be described, with reference to the accompanying drawings, in which:
Figure 1 schematically illustrates a magnetic landing pad system according to the first aspect of the present disclosure;
Figure 2 schematically illustrates a plan view of a first example of an aircraft landing pad according to the third aspect of the present disclosure, for use in the system of Figure 1;
Figure 3 schematically illustrates a second example of an aircraft landing pad according to the third aspect of the present disclosure, for use in the system of Figure 2;
Figure 4 schematically illustrates a magnetic landing pad system according to the second aspect of the present disclosure;
Figure 5 schematically illustrates a first example of an aircraft for use with the system of Figure 4;
Figure 6 schematically illustrates a second example of an aircraft for use with the system of Figure 4;
Figure 7 schematically illustrates a vehicle having an aircraft landing pad according to the present disclosure mounted thereon;
Figure 8 is a flow diagram showing a first method according to the present disclosure;
Figure 9 is a flow diagram illustrating a second method according to the present disclosure;
Figure 10 is a flow diagram illustrating a third method according to the present disclosure; and
Figure 11 schematically illustrates an example structure of a control unit according to the present disclosure.

Like reference numerals are used for like components throughout the description and the drawings.

### DETAILED DESCRIPTION OF THE EMBODIMENTS

Fluxgate magnetometers and optically pumped magnetometers (OPMs) are examples of high-sensitivity magnetometers which do not require cryogenic temperatures to operate. They therefore fall into a group of magnetometers that are defined herein as high-sensitivity non-cryogenic magnetometers. Their high-sensitivity makes them useful for detecting weak magnetic fields. Their non-cryogenic nature makes them lightweight and comparatively simple to implement, particularly in situations where cryogenic temperatures are difficult or impossible to achieve.

Due to their high sensitivities and non-cryogenic nature, the inventors have found that such magnetometers can be used for magnetic guiding of aircraft while landing, particularly in low-visibility conditions. Accordingly, the inventors have developed a magnetic landing pad system in which a magnetic field is generated from one of an aircraft landing pad and an aircraft, and the magnetic field is detected and analysed at the other of the aircraft landing pad and the aircraft, in order to determine the position of the aircraft relative to the landing pad.

OPMs are known to have particularly high sensitivities, with measured noise floors below 100 femtotesla per square-root-bandwidth, which exceed the sensitivity achievable by fluxgate magnetometers, with measured noise floors exceeding 1 picotesla per square-root-bandwidth. Accordingly, OPMs may be preferred for their superior sensitivity. OPMs may also be preferred for their lower susceptibility to systematic shifts in the magnetic field measurement, as they lack the scale-factor and temperature drifts found in fluxgate magnetometers. One challenge encountered with OPM magnetometers, is that their high sensitivity means that measurement signals comprise a large contribution from environmental/background fields, which may make determining usable readings difficult. This may be especially challenging when an OPM is mounted to an aircraft, such as a VTOL rotorcraft, in which case the OPM may be relatively close to moving metallic components of the aircraft such that the dominant magnetic field measured by the OPM may be generated by the rotorcraft itself rather than the localisation magnetic field which is to be detected, analysed, and used for localisation. In order to address this issue, filtering can be used to isolate the useful localisation magnetic field.

An example filtering approach which could be used for an OPM will now be described. The signal from the OPM is demodulated to extract the contribution from the magnetic beacon, e.g. the amplitude of the contribution from the magnetic beacon. Demodulation involves extracting an information-bearing signal from a carrier wave. According to the current disclosure, the amplitude may be extracted, rather than the phase, because the background noise from the rotors is at a large number of jumbled phases, which could coincide with the phase of the contribution from the magnetic beacon. Therefore, the focus on extracting the amplitude enables the accuracy of the filtered measurements to be improved.

The background noise from rotors of the UAV may typically comprise a range of frequencies. It will be appreciated that one or more of the rotors may vary its speed of rotation at different times, which itself may cause the background noise from the rotors to comprise a range of different frequencies. Therefore, according to the current disclosure the acquired signal is demodulated at a frequency which is outside the range of frequencies generated by the rotors. The acquired signal is demodulated at the transmission frequency of the magnetic beacon. The amplitude of the signal at this frequency may thereby be obtained.

The magnetic beacon may operate with a transmission frequency lower than frequencies comprised in the contribution from the rotor. The magnetic beacon may operate with a transmission frequency which is constant with time. By way of non-limiting example, this transmission frequency may be approximately 5 Hz. Other transmission frequencies are possible and envisaged, for example 1 Hz, 2 Hz, 3 Hz, 4 Hz, 6 Hz, 7 Hz, 8 Hz, 9 Hz, 10 Hz, 15 Hz, 20 Hz, 30 Hz, 40 Hz, 50 Hz, 60 Hz, etc. It may be advantageous to select a relatively low transmission frequency, such as approximately 5 Hz, since with higher frequencies there may be increased spectral spread, with sideband formation. This may hinder the measurement of a narrowly defined peak and of a reliable amplitude of that peak, which may reduce the accuracy of determinations of distance to the magnetic beacon. Therefore, the use of a transmission frequency of approximately 5 Hz may increase the accuracy of detection of a magnetic beacon and of determination of distance to the magnetic beacon.

The amplitude of the magnetic beacon signal detected by the OPM may be obtained by demodulation of the OPM data at the beacon transmission frequency. The amplitude of the magnetic beacon signal detected by the OPM may be obtained by lock-in detection, which may be used to extract the signal in a defined frequency range around the transmission frequency of the OPM.

The filtering of the magnetic field measurements may include applying a bandpass filter to the magnetic field measurements. A bandpass filter is configured to pass frequencies within a particular range and attenuate/reject frequencies outside that range. The bandpass filter may be configured to pass frequencies at a transmission frequency of the magnetic beacon. The bandpass filter may be configured to reject/attenuate frequencies of the contribution from the rotor of the UAV. The bandpass filter may be implemented as a finite impulse response (FIR) filter.

Though the background noise from the rotors may have a higher frequency than the transmission frequency of the magnetic beacon, aliasing of the contribution from the rotors is a possibility. This may occur due to under sampling of the contribution from the rotors, which may falsely indicate that the contribution from the rotors has a lower frequency through missing at least some of the peaks and troughs of the contribution. This may be avoided through implementing a higher sampling rate (e.g. at a sampling rate above the Nyquist rate of the signal) and/or by using a low-pass filter to block frequencies above the Nyquist frequency of the sampling electronics.

The signal may be corrected for time base jitter. The OPM may measure data at an internal clock rate which may not be constant with time. This time base jitter may be corrected for by not taking data at this internal clock rate, but by taking points regularly at constant intervals (e.g. of a microsecond) to give a resolution corresponding to the interval length and enable demodulation at that resolution. The removal of this time base jitter may advantageously reduce spectral spread and power loss to sideband formation, which may increase the accuracy of the detection of a magnetic beacon.

As will become clear from the examples that follow, a magnetometer which is not a high-sensitivity magnetometer may be useable where an electromagnet is used to generate the magnetic localisation field, for example a high-power electromagnet or a directional electromagnet, which would achieve a useable detection range. However, a high-sensitivity magnetometer may be preferred in many examples, in order to achieve a useable detection range without requiring the magnetic element to be a high-power electromagnet or a directional electromagnet.

In the examples described below, the magnetometer will be described as a magnetometer per se. However, as the reader will understand, where a magnetometer is described, a high-sensitivity magnetometer, e.g. a high-sensitivity non-cryogenic magnetometer such as a fluxgate magnetometer or an OPM may be used to increase detection range and usability as described above.

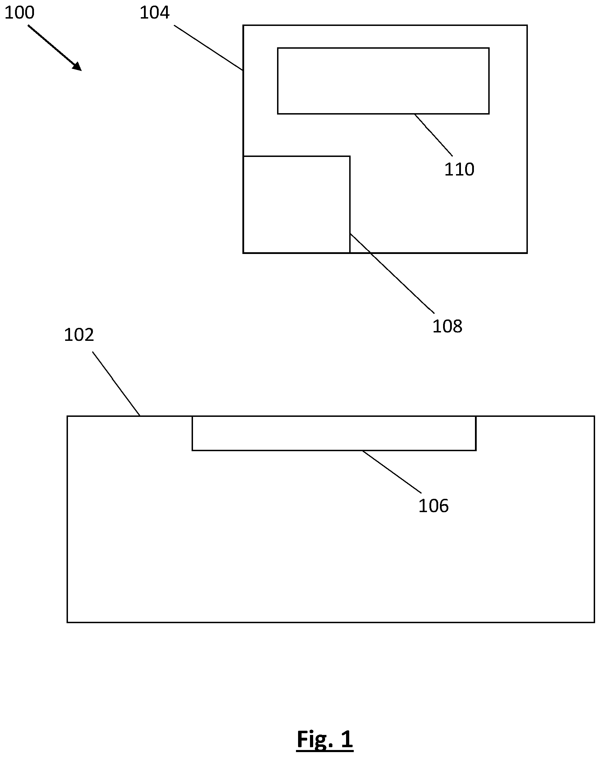

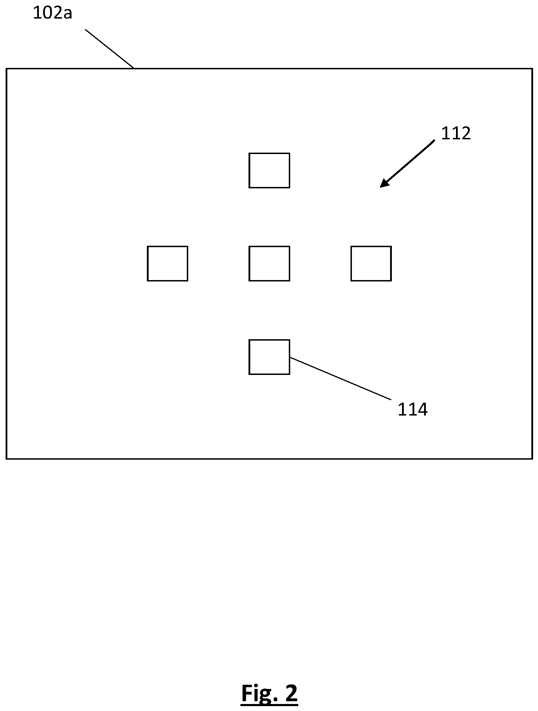

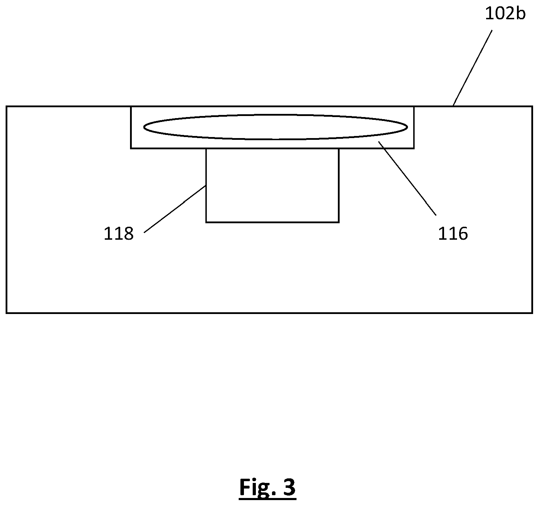

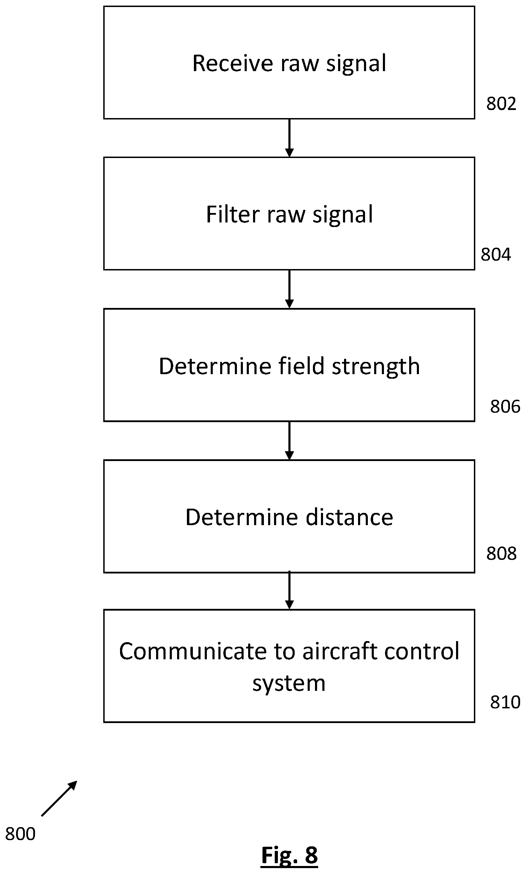

Figure 1 schematically illustrates a magnetic landing pad system 100 according to the first aspect of the present disclosure. The magnetic landing pad system 100 includes a landing pad 102, and an aircraft 104, for example (but not limited to) a VTOL UAV. The landing pad 102 includes a magnetic element 106, the magnetic element 106 arranged to generate a magnetic field around the landing pad 102, particularly above the landing pad 102. Further detail on the landing pad 102 will be provided below in respect of Figures 2 and 3. The aircraft 104 includes a magnetometer 108 arranged to detect magnetic flux originating from the magnetic element at landing pad 102, and to output a signal indicative of a field strength of magnetic flux detected at the magnetometer; and a control unit 110 configured to receive the output signal and determine, based on the output signal, a location of the landing pad relative to the aircraft, for example a distance to the landing pad from the aircraft. More detail on the processing performed at the control unit 110 is provided in Figure 8.

Figure 2 shows a first example 102a of a landing pad according to the third aspect, for use in the system 100 of Figure 1. As shown in Figure 2, the landing pad 102a includes an array 112 of permanent magnets 114. In the specific example of Figure 2, the array 112 of permanent magnets 114 comprises 5 permanent magnets, arranged in a cross formation. However, the number of permanent magnets may in some examples be more than five, may be fewer than 5, and may be arranged in an arrangement other than a cross formation. In one example, a single permanent magnet may be used. Where permanent magnets are used, the magnetic field generated around the landing pad is static, with a static field shape. The permanent magnets are arranged in a landing surface (typically an upper surface) of the landing pad, to thereby produce a magnetic field which extends above the landing pad.

Figure 3 shows a second example 102b of a landing pad according to the third aspect, for use in the system 100 of Figure 1. The landing pad 102b comprises an antenna or coil 116 arranged in a landing surface (typically an upper surface) of the landing pad 102b, and a driver 118 configured to supply a driving current to the antenna or coil 116, such that the antenna or coil 116 generates a beacon magnetic field which extends above the landing pad 102b.

In some examples, the landing pad 102b may comprise multiple coils, and multiple respective drivers, with each coil and driver pair configured to generate a magnetic beacon signal of a unique respective characteristic, for example a unique respective oscillation frequency. By orienting the magnetic beacon signals in different respective directions from one another, the control system 110 of the aircraft 104 may be able to determine both a distance from the landing pad 102b, and a direction to the landing pad 102b.

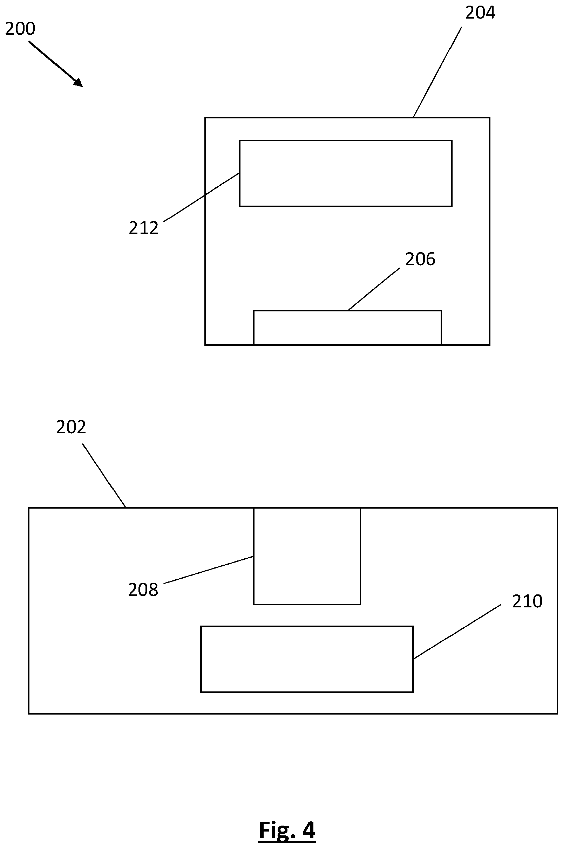

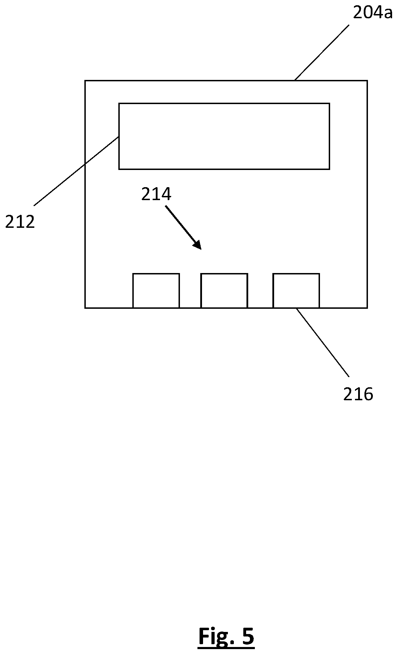

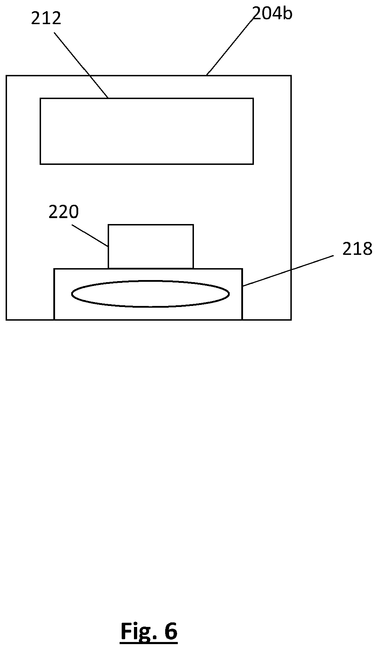

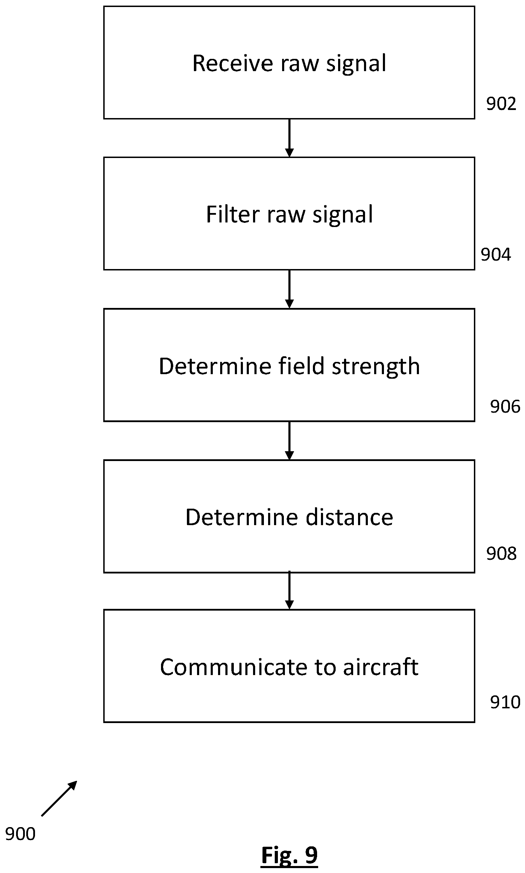

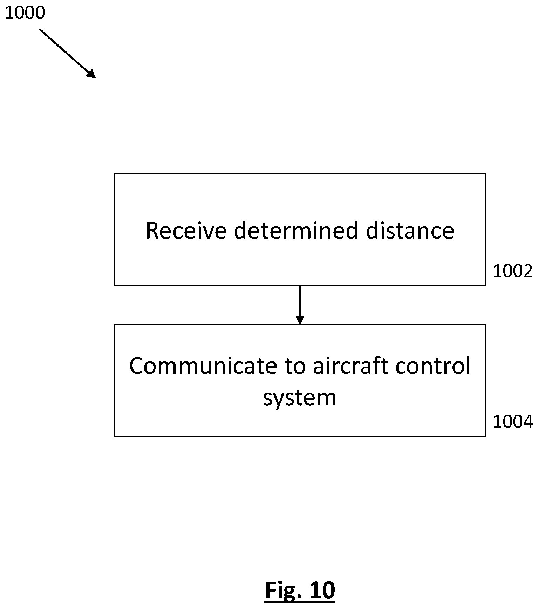

Figure 4 shows a magnetic landing pad system 200 according to the second aspect. The system 200 includes a landing pad 202, and an aircraft 204, for example (but not limited to) a VTOL UAV. The aircraft 204 includes a magnetic element 206, the magnetic element 206 arranged to generate a magnetic field around the aircraft 204, for example a magnetic field which extends below the aircraft 204. Further detail on the aircraft 204 will be provided below in respect of Figures 5 and 6. The landing pad 202 includes a magnetometer 208 arranged to detect magnetic flux originating from the aircraft 204 and to output a signal indicative of a field strength of magnetic flux detected at the magnetometer; and a control unit 210 configured to receive the output signal and determine, based on the output signal, a location of the aircraft 204 relative to the landing pad 202, for example a distance to the aircraft 204 from the landing pad 202. Control unit 210 is further configured communicate to the aircraft 204 the position of the landing pad 202 relative to the aircraft 204, for example the separation distance between the landing pad 202 and the aircraft 204. For this purpose, the aircraft 204 includes a further control unit 212 for communication with the control unit 210. More detail on the processing performed at the control units 210 and 212 is provided below in Figures 9 and 10.

Figure 5 shows a first example of an aircraft 204a from the system 200 of Figure 4. The UAV includes the control unit 212, and further includes, as the magnetic element, an array 214 of permanent magnets 216. The array 214 is arranged in an underside of the aircraft 204a.

Figure 6 shows a second example of an aircraft 204b from the system 200 of Figure 4. The UAV includes the control unit 212, and further includes, as the magnetic element, a coil or antenna 218, and a driver 220 configured to supply a driving current to the antenna or coil 218. The coil or antenna 218 is arranged in an underside of the aircraft 204b, such that the antenna or coil 218 generates a magnetic field beacon in a region below the aircraft 204b. The control unit 212 may be configured to cause the driver 220 to drive the coil or antenna 218 upon approach to the landing pad 202.

In some examples, the aircraft 204b may comprise multiple coils, and multiple respective drivers, with each coil and driver pair configured to generate a magnetic beacon signal of a unique respective characteristic, for example a unique respective oscillation frequency. By orienting the magnetic beacon signals in different respective directions from one another, the control system 210 of landing pad 202 may be able to determine both a distance from the aircraft 204b, and a direction to the aircraft 204b.

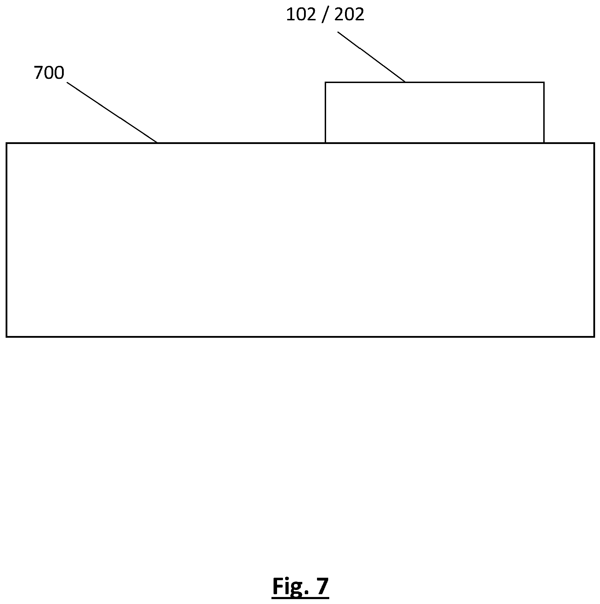

Figure 7 shows a vehicle 700 according to the fifth aspect, having an aircraft landing pad 102, 102a, 102b, 202 from Figure 1, Figure 2, Figure 3, or Figure 4 mounted thereon. The vehicle may be a land vehicle, for example a car, truck, or tank. The vehicle may alternative be an amphibious vehicle, or a boat.

Figure 8 shows a method 800 performed by the control unit 110 of Figure 1.

At step 802, the controller receives a raw signal from the magnetometer 108.

At step 804, the control unit 110 filters the raw signal from the magnetometer 108, to determine a filtered signal.

At step 806, the control unit 110 determines, based on the filtered signal, a magnetic field strength detected at the magnetometer.

At step 808, the control unit 110 determines, based on the detected magnetic field strength, a distance to the landing pad 102.

At step 810, the control unit 110 communicates the distance to the landing pad 102 to an aircraft control system (not shown in Figure 1)) located on the aircraft 104.

In order to enable accurate distance determination, the magnetometer 108 and control unit 110 may be calibrated to the magnetic element 106.

Figure 9 shows a method 900 performed by the control unit 210 of Figure 4.

At step 902, the control unit 210 receives a raw signal from the magnetometer 208.

At step 904, the control unit 210 filters the raw signal from the magnetometer 208, to determine a filtered signal.

At step 906, the control unit 210 determines, based on the filtered signal, a magnetic field strength detected at the magnetometer.

As step 908, the control unit 210 determines, based on the detected magnetic field strength, a distance to the aircraft 204.

At step 910, the control unit 210 wirelessly communicates the determined distance to the control unit 212 on the aircraft 204.

In order to enable accurate distance determination, the magnetometer 208 and control unit 210 may be calibrated to the magnetic element 206.

Figure 10 shows a method 1000 performed by the control 212 of Figure 4.

At step 1002, the control unit 212 receives the determined distance between the aircraft 204 and the landing pad 202 from the control unit 210.

At step 1002, the control unit 212 communicates the distance to the landing pad 202 to an aircraft control system (not shown in Figure 4) located on the aircraft 204.

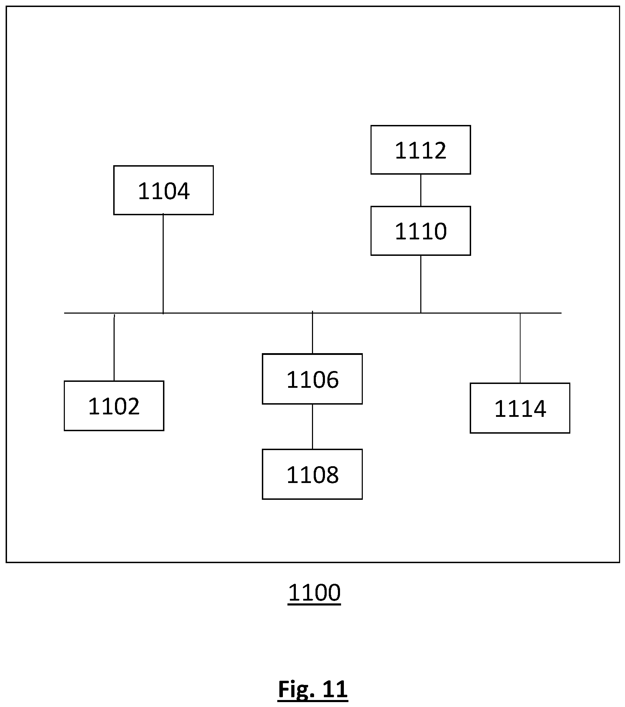

Turning finally to Figure 11, shown is a block diagram showing an example structure for control unit 110/210/212 according to the present disclosure, e.g. for implementing a method according to Figure 8, Figure 9, and/or Figure 10.

The control unit 1100 is a computer apparatus which comprises various data processing resources such as a processor 1102 (in particular, a hardware processor) coupled to a central bus structure. Also connected to the bus structure are further data processing resources such as memory 1104. A display adapter 1106 connects a display device 1108 to the bus structure. One or more user-input device adapters 1110 connect a user-input device 1112, such as a keyboard and/or a mouse to the bus structure. One or more communications adapters 1114 are also connected to the bus structure to provide connections to other computer systems 1100 and other networks.

In operation, the processor 1102 of computer system 1100 executes a computer program comprising computer-executable instructions that may be stored in memory 1104. When executed, the computer-executable instructions may cause the computer system 1100 to perform one or more of the methods described herein. The results of the processing performed may be displayed to a user via the display adapter 1106 and display device 1108. User inputs for controlling the operation of the computer system 1100 may be received via the user-input device adapters 1110 from the user-input devices 1112.

It will be apparent that some features of computer system 1100 may be absent in certain cases. For example, one or more of the plurality of computer apparatuses 1100 may have no need for display adapter 1106 or display device 1108. This may be the case, for example, for particular server-side computer apparatuses 1100 which are used only for their processing capabilities and do not need to display information to users. Similarly, user input device adapter 1110 and user input device 1112 may not be required. In its simplest form, computer apparatus 1100 comprises processor 1102 and memory 1104.

The above detailed description describes a variety of example arrangements for and methods of controlling a system as disclosed herein. However, the described arrangements and methods are merely exemplary, and it will be appreciated by a person skilled in the art that various modifications can be made without departing from the scope of the appended claims.

More generally, it should be appreciated that the number of steps shown in the figures is not intended to be limiting. Steps may be repeated as often as necessary and certain steps may be omitted.

The computer apparatus discussed above may be a local computer or a server.

While various specific combinations of components and method steps have been described, these are merely examples. Components and method steps may be combined in any suitable arrangement or combination. Components and method steps may also be omitted to leave any suitable combination of components or method steps.

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

In an implementation, the modules, components, and other features described herein can be implemented as discrete components or integrated in the functionality of hardware components such as ASICS, FPGAs, DSPs, or similar devices.

The above implementations have been described by way of example only, and the described implementations are to be considered in all respects only as illustrative and not restrictive. It will be appreciated that variations of the described implementations may be made without departing from the scope of the disclosure. It will also be apparent that there are many variations that have not been described, but that fall within the scope of the appended claims.

## Claims

1. A magnetic landing pad system, the system comprising:
an aircraft landing pad comprising a magnetic element arranged to generate a magnetic field around the landing pad; and
an aircraft comprising a magnetometer and a control unit coupled to the magnetometer;
wherein the control unit is configured, based on a signal output from the magnetometer, to determine a location of the landing pad relative to the aircraft.

2. A magnetic landing pad system, the system comprising:
a landing pad comprising a magnetometer and a first control unit coupled to the magnetometer; and
an aircraft comprising a magnetic element arranged to generate a magnetic field around the aircraft, and a second control unit configured to wirelessly communicate with the first control unit;
wherein the first control unit is configured, based on a signal output from the magnetometer, to determine a location of the aircraft relative to the landing pad; and
wherein the first control unit is configured to wirelessly communicate the location of the landing pad relative to the second control unit.

3. The system of claim 1 or claim 2, wherein the aircraft is a vertical take-off and landing (VTOL) aircraft.

4. The system of any preceding claim, wherein the aircraft is an unmanned aerial vehicle (UAV).

5. The system of any preceding claim, wherein the magnetometer is an optically pumped magnetometer (OPM).

6. The system of any preceding claim, wherein the (first) control unit is configured to determine a separation distance between the landing pad and the aircraft based on the signal output from the magnetometer.

7. The system of any preceding claim, wherein the magnetic element comprises a permanent magnet or an array of permanent magnets.

8. The system of any preceding claim, wherein the magnetic element comprises a magnetic beacon.

9. The system of any preceding claim, further comprising a vehicle, wherein the landing pad is mounted on the vehicle.

10. The system of any preceding claim, wherein the magnetometer is configured to output a signal indicative of magnetic field strength, and wherein the (first) control unit is configured to determine a separation distance between the landing pad and the aircraft based on the signal output from the magnetometer.

11. An aircraft landing pad, the aircraft landing pad comprising a magnetic element arranged to generate a magnetic field around the landing pad.

12. The aircraft landing pad of claim 11, wherein the magnetic element comprises a permanent magnet or an array of permanent magnets, and/or wherein the magnetic element comprises a magnetic beacon.

13. An aircraft landing pad comprising a magnetometer arranged to detect magnetic flux originating from a region above the landing pad, and a control unit coupled to the magnetometer, the control unit configured, based on a signal output from the magnetometer, to determine a location from which the magnetic flux originates.

14. The aircraft landing pad according to claim 14, wherein the control unit is configured, based on a signal output from the magnetometer, to determine a distance to the location from which the magnetic flux originates.

15. A vehicle, the vehicle having a landing pad according to any of claims 10 to 15 mounted thereon.
